# FASCICULE DE BREVET EUROPEEN

(11) **EP 1 124 048 B1**
(45) Date de publication et mention de la délivrance du brevet: **03.08.2005**
(21) Numéro de dépôt: 00490038.7
(22) Date de dépôt: 03.10.2000
(51) Int. Cl.: F02D 19/06

(54) **Dispositif de double alimentation carburant pour moteur diesel**
Vorrichtung zur Versorgung eines Diesel-Motors mit zwei Kraftstoffen
Dual fuel supply device for a diesel engine

(30) Priorité: 08.02.2000 FR 0001561
(43) Date de publication de la demande: 16.08.2001
(73) Titulaire: Ledun, Paul, 59890 Quesnoy sur Deule (FR)
(72) Inventeur: Ledun, Paul, 59890 Quesnoy sur Deule (FR)
(74) Mandataire: Hennion, Jean-Claude

(56) Documents cités:
- FR-A- 2 777 605
- US-A- 2 940 435
- US-A- 3 288 238
- US-A- 4 620 568
- US-A- 5 555 873
- PATENT ABSTRACTS OF JAPAN vol. 008, no. 201 (M-325), 14 septembre 1984 (1984-09-14) & JP 59 090733 A (NIHON SEKIYU HANBAI KK), 25 mai 1984 (1984-05-25)

## Description

L'invention concerne un dispositif d'alimentation des moteurs diesel en fuel domestique.

En FRANCE, l'arrêté ministériel du 29 avril 1970 (Journal Officiel Lois et Décrets du 10 mai 1970, page 4419) a fixé des conditions d'emploi du fuel pour bénéficier du régime fiscal privilégié institué par l'article 265 du code des douanes en matière de taxe intérieure de consommation. Selon l'article 1 de cet arrêté, des véhicules spéciaux, tels que malaxeurs à béton, comportant un moteur unique assurant alternativement la propulsion du véhicule et le fonctionnement des appareils qui y sont montés, peuvent utiliser du fuel pour ces appareils, sous réserve de la présence d'un double réservoir de carburant et d'un dispositif de sélection automatique empêchant, lors de la propulsion du véhicule, l'alimentation du moteur unique à partir du réservoir de fuel.

Le fuel domestique, beaucoup plus faiblement taxé que le gasoil, en FRANCE, doit contenir un colorant rouge écarlate tel que l'azobétanaphtol et un agent traceur dénommé Solvent Yellow 124, ces dispositions réglementaires facilitant la détection d'usages prohibés de fuel domestique.

On connaît déjà, dans l'art antérieur, différentes conceptions de systèmes double alimentation en combustible pour moteur diesel.

Le document FR-2.220.679 décrit une installation de contrôle de l'alimentation d'une pompe à injection d'un moteur diesel, sélectivement à partir d'un réservoir de gasoil ou d'un réservoir de fuel. Cette installation comprend deux électrovannes trois voies contrôlées par la commande manuelle de l'embrayage du moteur, la première directement et la seconde par l'intermédiaire d'un relais temporisé.

Le fonctionnement de cette installation antérieure est le suivant. Lorsque le moteur de la pompe à béton est accouplé à cette pompe à béton, le levier d'embrayage est dans une position référencée 2C et le fuel contenu dans un réservoir passe dans l'électrovanne trois voies d'amenée pour alimenter la pompe à injection du moteur. La sortie de la pompe à injection est reliée à l'électrovanne trois voies de retour, elle même reliée aux deux réservoirs de carburant. Lorsque le moteur de la pompe à béton est accouplé aux roues du véhicule, le levier d'embrayage est dans une position référencée 2R et le gasoil est pompé de son réservoir pour passer dans l'électrovanne d'amenée, la pompe à injection et l'électrovanne de retour.

Le dispositif décrit dans le document FR-2.220.679 présente de nombreux inconvénients. En particulier, les deux carburants empruntent des circuits identiques (tuyauteries et électrovannes) et une pompe unique d'alimentation du moteur fonctionne en continu. Ce dispositif nécessite de ce fait de modifier le montage du moteur du constructeur, avec des risques en termes de garantie, de sécurité, notamment vis à vis des surpressions et échauffements de carburants.

Le document FR-2.296.766 décrit un dispositif de sélection automatique du carburant pour moteur diesel. Ce dispositif est particulièrement complexe et comprend pas moins de cinq distributeurs pneumatiques. Un seule pompe d'injection alimente le moteur en gasoil et fuel, ce qui nécessite de modifier le montage du moteur du constructeur, avec des risques en termes de garantie, de sécurité, notamment vis à vis des surpressions et échauffements de carburants.

On peut se référer également aux documents FR-2.474.590, FR-2.483.525, FR-2.510.660, FR-2.797.470, US-4.620.568.

La présente invention concerne un dispositif d'alimentation des moteurs diesel en fuel domestique avec retour, complètement indépendant du circuit gasoil d'origine, de façon à ne pas engendrer de surpression et de surchauffe du carburant qui détériorait le système d'injection et les filtres, change les réglages constructeurs, ce qui amène celui-ci à suspendre sa garantie dès qu'une anomalie survient. L'arrêté du 29 avril 1970 autorise la consommation du fuel domestique à l'arrêt du véhicule, le moteur étant utilisé à ce moment pour entraîner diverses machines tel que pompe, malaxeur à béton, grue, etc..

Le dispositif selon l'invention comporte un réservoir fuel domestique 1, un pré-filtre séparateur d'eau 2, une pompe d'alimentation électrique 3 ou pneumatique, les filtres classiques 4,8 recommandés par le constructeur. Une électrovanne trois voies 7 placée sur le circuit d'arrivée de gasoil permet, quand elle n'est pas sous tension, l'alimentation normale du moteur, et dès que l'on utilise le fuel domestique, elle assure le retour gasoil dans son réservoir 11 pendant tout le temps du fonctionnement du moteur à l'arrêt du véhicule (by-pass). Une deuxième électrovanne trois voies 6 est placée sur le circuit commun de retour, elle permet par sa commande temporisée de rincer la pompe d'injection 10 dès la remise en route normale du véhicule pour éviter toute pollution, elle pilote aussi le retour des carburants vers les réservoirs respectifs 1,11.

Une platine électronique équipée d'un micro-processeur va repérer si les pressostats posés sur le circuit de frein de parc, boite de vitesse et prise de force sont enclenchés. Cette procédure a été élaborée pour éviter toute tentative de fraude ; si ces conditions sont toutes réunies alors le fonctionnement au fuel domestique s'enclenchera immédiatement.

Un voyant rouge s'allumera au tableau de bord lorsque le moteur est alimenté par le fuel domestique. Un godet transparent 12 est intégré dans la conduite d'alimentation, ce qui permet aux services de répression des fraudes de contrôler visuellement la couleur du carburant utilisé.

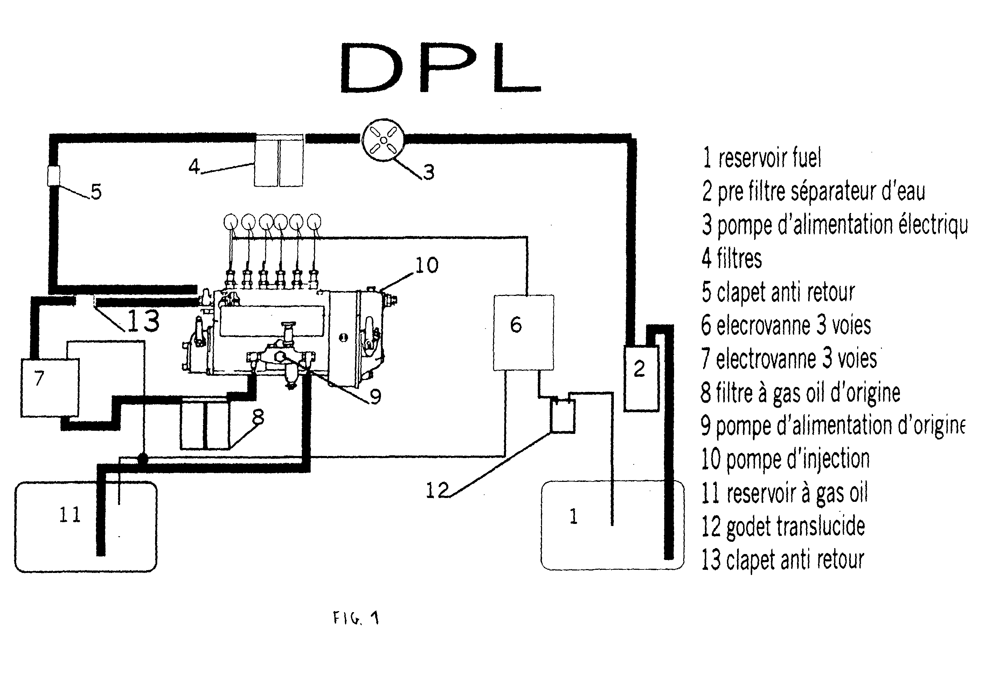

## Revendications

1. Dispositif d'alimentation d'un moteur en fuel domestique ou en gasoil, ce dispositif étant apte à être intégré dans un véhicule tel un camion et autorisant à l'arrêt de ce véhicule l'emploi du moteur du véhicule pour l'entraînement de machines telles que pompes de dépotage, grue, malaxeur à béton, le dispositif comprenant :
- un circuit d'alimentation de gasoil comprenant un réservoir gasoil (11) et une pompe d'alimentation (9) en amont d'une pompe d'injection (10) ;
- un circuit d'alimentation de fuel domestique comprenant un réservoir de fuel domestique (1), une pompe électrique d'alimentation (3) et un système de filtration (4) ;
- une première électrovanne à trois voies (6) placée sur le circuit commun de retour et assurant les retours sélectionnés vers les réservoirs de fuel domestique (1) et de gasoil (11) ;
le dispositif est **caractérisé en ce que** le circuit d'alimentation en fuel domestique est complètement indépendant du circuit gasoil entre le réservoir de fuel domestique (1) et ladite pompe d'injection (10) et une deuxième électrovanne à trois voies (7) placée sur le circuit d'arrivée de gasoil entre ladite pompe d'alimentation (9) et l'arrivée sur ladite pompe d'injection (10), permettant, lorsqu'elle n'est pas sous tension, l'alimentation du moteur en gasoil et, dès que l'on utilise le fuel domestique, le retour du gasoil dans le réservoir de gasoil (11) pendant tout le temps du fonctionnement du moteur au fuel domestique ; le dispositif comprenant des moyens de sécurité permettant de temporiser la fermeture de fuel domestique de retour par ladite première électrovanne (6) de façon à rincer la pompe d'injection (10) au moment de la remise en route en gasoil, pendant un temps de l'ordre de 25 secondes, un microprocesseur autorisant le fonctionnement au fuel domestique si la boite de vitesse du véhicule est au point mort, si le frein de parking est tiré et la prise de force enclenchée, lesquels sont contrôlés par des contacteurs électriques et pressostats montés en série dans le circuit et protégés par des scellements plombés.

2. Dispositif d'alimentation selon la revendication 1, **caractérisé en ce que** le circuit d'amenée du fuel comprend en amont de la pompe (3), un pré-filtre séparateur d'eau (2) et un clapet anti-retour (5) en aval de la pompe (3).

3. Dispositif d'alimentation selon la revendication 1 ou 2, **caractérisé en ce que** le circuit d'amenée du fuel comprend en outre un filtre (4) en amont ou en aval de la pompe (3), électrique ou pneumatique.

4. Dispositif d'alimentation selon l'une quelconque des revendications 1 à 3, **caractérisé en ce que** l'électrovanne trois voies (6) placée sur le circuit commun de retour carburant permet, par sa commande temporisée, le rinçage de la pompe d'injection (10) dès la remise en marche du moteur au gasoil.

5. Dispositif d'alimentation selon l'une quelconque des revendications 1 à 4, **caractérisé en ce que** son fonctionnement au fuel est enclenché automatiquement dès lors que des pressostats posés sur le circuit de frein de parc, boite de vitesse et prise de force sont enclenchés.

6. Dispositif d'alimentation selon l'une quelconque des revendications 1 à 5, **caractérisé en ce qu'**un voyant s'allume au tableau de bord du véhicule lorsque le moteur est alimenté en fuel, un godet transparent (12) étant en outre intégré dans la conduite d'alimentation en fuel de sorte à contrôler visuellement le type de carburant utilisé.

## Patentansprüche

1. Vorrichtung zur Versorgung eines Motors mit Haushaltsheizöl oder Diesel, wobei diese Vorrichtung ausgebildet ist, in ein Fahrzeug, wie beispielsweise einen Lastwagen, eingebaut zu werden und bei Stillstand dieses Fahrzeugs die Verwendung des Motors des Fahrzeugs für den Antrieb von Maschinen, wie beispielsweise Zapfpumpen, Kran, Betonmischer, zu ermöglichen, wobei diese Vorrichtung umfaßt:
- eine einen Dieselbehälter (11) und eine Versorgungspumpe (9) stromaufwärts einer Einspritzpumpe (10) umfassende Diesel-Versorgungsleitung,
- eine einen Haushaltsheizölbehälter (1), eine elektrische Versorgungspumpe (3) und ein Filtersystem (4) umfassende Haushaltsheizölversorgungsleitung,
- ein in der gemeinsamen Rücklaufleitung angeordnetes und die gewählten Rückläufe zu den Haushaltsheizöl- (1) und den Dieselbehältem (11) sicherstellendes erstes Dreiwege-Magnetventil (6),
wobei die Vorrichtung **dadurch gekennzeichnet ist,**
**daß** die Haushaltsheizölversorgungsleitung völlig unabhängig von der Dieselleitung zwischen dem Haushaltsheizölbehälter (1) und der Einspritzpumpe (10) ist und daß ein zweites Dreiwege-Magnetventil (7), das in der Dieselzuführleitung zwischen der Versorgungspumpe (9) und der Zuleitung zur Einspritzpumpe (10) angeordnet ist, die Versorgung des Motors mit Diesel, wenn es nicht unter Spannung ist, und, wenn das Haushaltsheizöl verwendet wird, den Rücklauf des Diesels in den Dieselbehälter (11) während der gesamten Betriebszeit des Motors mit Haushaltsheizöl ermöglicht;
wobei die Vorrichtung Sicherheitsmittel umfaßt, die es ermöglichen, den Verschluß des durch das erste Magnetventil (6) zurücklaufenden Haushaltsheizöls zu verzögern, um die Einspritzpumpe (10) zum Zeitpunkt der Wederingangsetzung mit Diesel während einer Zeit von ungefähr 25 Sekunden zu spülen,
wobei ein Mikroprozessor den Betrieb mit Haushaltsheizöl gestattet, wenn das Getriebe des Fahrzeugs im Leerlauf läuft, die Handbremse angezogen und die Zapfwelle eingeschaltet ist, die durch elektrische Kontaktgeber und Druckregler gesteuert werden, die im Kreislauf in Serie geschaltet und durch Bleisiegel geschützt sind.

2. Vorrichtung zur Versorgung nach Anspruch 1, **dadurch gekennzeichnet, daß** die Heizölzuleitung vor der Pumpe (3) einen vorgeschalteten Wasserabscheider (2) und hinter der Pumpe (3) ein Rückschlagventil (5) aufweist.

3. Vorrichtung zur Versorgung nach Anspruch 1 oder 2, **dadurch gekennzeichnet, daß** die Heizölzuleitung außerdem mit einem Filter (4) vor oder nach der elektrisch oder mit Druckluft betriebenen Pumpe (3) ausgestattet ist.

4. Vorrichtung zur Versorgung nach einem der Ansprüche 1 bis 3, **dadurch gekennzeichnet, daß** das im gemeinsamen Kreislauf für den Treibstoffrücklauf angeordnete Dreiwege-Magnetventil (6) durch die zeitverzögerte Steuerung die Reinigung der Einspritzpumpe (10) bei Anlaufen des Dieselmotors zuläßt.

5. Vorrichtung zur Versorgung nach einem der Ansprüche 1 bis 4, **dadurch gekennzeichnet, daß** der Heizölbetrieb automatisch eingeschaltet wird, wenn die Druckregler des Kreislaufs für Handbremse, Getriebe und Zapfwelle anspringen.

6. Vorrichtung zur Versorgung nach einem der Ansprüche 1 bis 5, **dadurch gekennzeichnet, daß** eine Leuchtanzeige im Armaturenbrett des Fahrzeugs aufleuchtet, wenn der Motor mit Heizöl betrieben wird, wobei die Heizölzuleitung außerdem eine durchsichtige Kapsel (12) aufweist, die eine Kontrolle des verwendeten Treibstoffs durch Inaugenscheinnahme ermöglicht.

## Claims

1. Feeding device of a domestic fuel / diesel engine. This device can be used in a vehicle, such as a lorry. When the vehicle stops it allows the vehicle's engine to drive machines, such as emptying pumps, a crane, or a concrete mixer. The device comprises:
- a diesel feed system consisting of a diesel tank (11) and a feed pump (9) upstream of an injection pump (10);
- a domestic fuel feed system consisting of a domestic fuel tank (1), an electric feed pump (3) and a filtration system (4);
- a first three-way electrovalve (7) situated on the common fuel return pipe allowing selected retums to the domestic fuel (1) and diesel (11) tanks;
The device is **characterised by** the complete independence of the domestic fuel feed system from the diesel system between the domestic fuel tank (1) and said injection pump (10) and a second three-way electrovalve (7) situated on the diesel inlet pipe between said feed pump (9) and the inlet on said injection pump (10), allowing the feeding of the motor with diesel, when it is not live, and if domestic fuel is being used, the returning of the diesel to the diesel tank (11) throughout the time that the engine is running on domestic fuel. The device comprises safety devices allowing the timer-controlled closing of the domestic fuel return pipe by said first electrovalve (7), in order to rinse the injection pump (10) for around 25 seconds when the diesel is reconnected, and a microprocessor which allows the engine to run on domestic fuel when the vehicle's gearbox is in neutral, the handbrake is on and the power take-off is engaged. The latter are controlled by electric switches and pressure switches connected in series to the system and protected by lead seals.

2. Feeding device in accordance with claim 1, **characterised by** the fact that the fuel inlet pipe comprises, upstream of the pump (3), a primary water trap filter (2) and a check valve (5) downstream of the pump (3).

3. Feeding device in accordance with claim 1 or 2, **characterised by** the fact that the fuel inlet pipe also comprises a filter (4) which is either upstream or downstream of the pump (3), the latter being either electric or pneumatic.

4. Feeding device in accordance with any of the claims 1 to 3, **characterised by** the fact that the three-way electrovalve (6) situated on the common fuel return pipe permits, thanks to its timer control, the rinsing of the injection pump (10) as soon as the diesel engine is restarted.

5. Feeding device in accordance with any of the claims 1 to 4, **characterised by** the fact that it starts to run on domestic fuel automatically as soon as the pressure switches on the handbrake, gearbox and power take-off are engaged.

6. Feeding device in accordance with any of the claims 1 to 5, **characterised by** the fact that a warning light on the vehicle's instrument panel comes on when the engine is fed with domestic fuel and that a see-through oil cup (12) is part of the fuel inlet pipe so that the type of fuel being used can be checked visually.
